(19)

Europäisches Patentamt
European Patent Office
Office européen des brevets

(11) **EP 3 492 735 B1**

(12) **EUROPÄISCHE PATENTSCHRIFT**

(45) Veröffentlichungstag und Bekanntmachung des Hinweises auf die Patenterteilung:
**07.04.2021 Patentblatt 2021/14**

(51) Int Cl.:
*F03D 7/02* *(2006.01)*          *F03D 17/00* *(2016.01)*
*F03D 80/40* *(2016.01)*

(21) Anmeldenummer: **17204425.7**

(22) Anmeldetag: **29.11.2017**

(54) **VERFAHREN UND VORRICHTUNG ZUM ERMITTELN EINER STATISCHEN UNWUCHT EINES ROTORS EINER WINDENERGIEANLAGE**

METHOD AND DEVICE FOR DETERMINING A STATIC UNBALANCE OF A ROTOR OF A WIND ENERGY SYSTEM

PROCÉDÉ ET DISPOSITIF DE DÉTERMINATION D'UNE FORCE STATIQUE D'UN ROTOR D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.06.2019 Patentblatt 2019/23**

(73) Patentinhaber: **Nordex Energy SE & Co. KG**
**22419 Hamburg (DE)**

(72) Erfinder:
• **Hellmich, Bernd**
**30455 Hannover (DE)**

• **Haevernick, René**
**23970 Wismar (DE)**

(74) Vertreter: **Epping - Hermann - Fischer**
**Patentanwaltsgesellschaft mbH**
**Schloßschmidstraße 5**
**80639 München (DE)**

(56) Entgegenhaltungen:
**EP-A1- 2 354 538      EP-A1- 2 434 146**
**GB-A- 2 459 726      US-A1- 2005 276 696**

**Beschreibung**

Die Anmeldung betrifft ein Verfahren zum Ermitteln einer statischen Massenunwucht eines Rotors einer Windenergieanlage hinsichtlich Größe und Ort (Drehwinkel) sowie eine Vorrichtung, die dazu ausgebildet ist, ein derartiges Verfahren auszuführen.

Rotatorische Bewegungen können bei einer Unwucht zu unerwünschten drehzahlabhängigen Anregungen führen. Umlaufende, unwuchtimplizierte Fliehkräfte können beispielsweise zu vorzeitigen Lagerschäden, störenden Geräuschen und anderen unerwünschten Effekten führen. Insbesondere können rotatorische Bewegungen bei einer Unwucht zu unerwünschten drehzahlabhängigen Anregungen führen.

EP 2 354 538 A1 betrifft ein Verfahren zum In-situ-Kalibrieren von Lastsensoren einer Windkraftanlage, wobei die Kalibrierung nur auf Messungen basiert, die durchgeführt werden, wenn der Generator ausgeschaltet ist.

EP 2 434 146 A1 betrifft Verfahren zum Bestimmen eines Massenzustands eines Rotors einer Windenergieanlage, bei dem eine Massenänderung ermittelt wird.

Es ist wünschenswert, ein Verfahren zum Ermitteln einer statischen Unwucht eines Rotors einer Windenergieanlage anzugeben, das eine einfache und zuverlässige Ermittlung ermöglicht. Zudem ist es wünschenswert, eine Vorrichtung anzugeben, die ein einfaches und zuverlässiges Ermitteln einer Unwucht eines Rotors einer Windenergieanlage auch während des Betriebs der Anlage ermöglicht.

Die Erfindung zeichnet sich aus durch ein Verfahren zum Ermitteln einer statischen Unwucht eines Rotors einer Windenergieanlage sowie durch eine korrespondierende Vorrichtung, die zum Ausführen des Verfahrens ausgebildet ist.

Gemäß zumindest einer Ausführungsform weist der Rotor ein bekanntes Massenträgheitsmoment und eine Drehachse auf. Insbesondere handelt es sich um Rotoren mit horizontaler Drehachse im Schwerefeld der Erde. Sollte die Drehachse nicht senkrecht zur am Rotor angreifenden Schwerkraft stehen, sondern in einem Winkel kleiner 90°, ist das Verfahren ebenfalls anwendbar, allerdings unter Berücksichtigung des konkreten Neigewinkels gegenüber der Senkrechten zum Schwerefeld oder zum Auftriebsfeld.

Eine ortsabhängige Winkelbeschleunigung und ein ortsabhängiges Drehmoment werden während einer Rotorumdrehung als Funktion des Drehwinkels ermittelt. Ein Trägheitsmoment wird als Produkt aus Winkelbeschleunigung und Massenträgheitsmoment ermittelt. Das ermittelte Trägheitsmoment und das ermittelte Drehmoment werden zu einem ortsabhängigen Gesamtmoment addiert. Eine trigonometrische Funktion wird aus dem ortsabhängigen Gesamtmoment ermittelt. Die Unwucht weist gemäß zumindest einer Ausführungsform einen Abstand einer Unwuchtmasse von der Drehachse des Rotors und einen Winkel auf. Die Unwucht wird in Abhängigkeit von der Amplitude und der Phasenverschiebung der ermittelten trigonometrischen Funktion ermittelt.

Das anmeldungsgemäße Verfahren basiert auf der Messung des umlaufenden Drehmoments, das von der rotierenden Unwucht im äußeren Kraftfeld erzeugt wird. Insbesondere geschieht dies durch die zeitgleiche Erfassung von Drehzahlschwankungen, also der Winkelbeschleunigung, und Drehmoment, beispielsweise Brems- und Antriebsmomenten, am rotierenden Rotor. Drehwinkelabhängige Drehmomente und Winkelgeschwindigkeiten und/oder Winkelbeschleunigungen des Rotors werden bestimmt, um die Unwucht zu bestimmen. Dabei werden über eine Umdrehung die erforderlichen Größen gemessen oder aus der Steuerung der Anlage erfasst und eine Zerlegung durchgeführt in jene Anteile, die durch die Unwucht erzeugt werden und andererseits in jene Anteile die auf andere Ursachen zurückzuführen sind. Die Messung und/oder Erfassung kann online während des Betriebs von der Anlage selbst oder offline durch eine zusätzliche Messung erfolgen. Die Online-Messung kann beispielsweise im Trudelbetrieb, beim Hochlauf oder im Einspeisebetrieb der Windenergieanlage erfolgen.

Wenn keine Unwucht vorliegt, ist beispielsweise die Amplitude der trigonometrischen Funktion 0. Je größer die Unwucht ist, also beispielsweise je größer die Unwuchtmasse ist, desto größer ist die Amplitude der trigonometrischen Funktion. Die Phasenverschiebung der trigonometrischen Funktion gibt beispielsweise den Winkel vor, an dem die Unwuchtmasse bezogen auf einen vorgegebenen Nullpunkt liegt. Somit ist es mittels des anmeldungsgemäßen Verfahrens möglich, während dem Betrieb der Windenergieanlage in Abhängigkeit der ermittelten ortsabhängigen Winkelbeschleunigung und des ortsabhängigen Drehmoments mittels mindestens einer mathematischen Funktion die Unwucht zu ermitteln.

Die trigonometrische Funktion ist beispielsweise eine Sinusfunktion und/oder eine Kosinusfunktion. Bezogen auf eine Sinusfunktion ist der Nulldurchgang von negativen zu positiven Werten bei 0°, wenn auch die Unwuchtmasse bei einem Winkel von 0° ist. Wenn die Unwuchtmasse an einem Winkel ungleich 0° ist, verschiebt sich der Nulldurchgang der Sinusfunktion und aus dieser Phasenverschiebung ist der Winkel ableitbar.

Insbesondere ist es möglich, das anmeldungsgemäße Verfahren eine bekannte, bereits ermittelte Unwucht dazu zu nutzen, das Massenträgheitsmoment des Rotors zu messen bzw. zu überwachen. Bei Windenergieanlagen ändert sich das Massenträgheitsmoment beispielsweise im Betrieb durch gleichmäßigen Eisansatz, ohne das es zu einer Änderung der Unwucht kommt.

Gemäß zumindest einer Ausführungsform umfasst das Ermitteln der tatsächlichen Unwucht ein Durchführen eines Koeffizientenvergleichs für die Amplitude und die Phasenverschiebung. Somit lässt sich mit vergleichsweise einfachen Berechnung auf die Unwucht schließen.

Gemäß zumindest einer Ausführungsform wird das ortsabhängige Gesamtmoment als Funktion des Drehwinkels in einem Bildraum transformiert. Eine komplexe Amplitude wird als Intensität des unwuchtbedingten Moments im Bildraum der transformierten Funktion ermittelt. Der Winkel der statischen Unwucht wird in Abhängigkeit der komplexen Amplitude ermittelt.

Gemäß zumindest einer Ausführungsform werden der Realteil und der Imaginärteil der komplexen Amplitude für einen bestimmten Werteraum von Betriebsparametern der Windenergieanlage gefiltert. Ein Mittelwert des Realteils und des Imaginärteils der komplexen Amplitude wird ermittelt. Die statische Unwucht wird aus den Mittelwerten des Real- und des Imaginärteils der komplexen Amplitude ermittelt. Die Betriebsparameter sind beispielsweise mindestens eines aus: Drehzahl, Antriebsleistung, Bremsleistung und Anstellwinkel.

Gemäß zumindest einer Ausführungsform wird mindestens ein Betriebsparameter ermittelt. Der Realteil und der Imaginärteil der komplexen Amplitude werden jeweils als Funktion des mindestens einen Betriebsparameters dargestellt. Ein Anteil der komplexen Amplitude wird in Abhängigkeit von dem mindestens einen Betriebsparameter ermittelt. Der Anteil wird insbesondere mittels einer kontinuierlichen Anpassungsfunktion für den Realteil und den Imaginärteil ermittelt. Die statische Unwucht wird in Abhängigkeit von dem ermittelten Anteil ermittelt.

Gemäß zumindest einer Ausführungsform ist die Anpassungsfunktion eine Polynomfunktion. Alternativ oder zusätzlich ist die Anpassungsfunktion eine Exponentialfunktion.

Gemäß zumindest einer Ausführungsform wird ein Testgewicht an den Rotor gesetzt. Ein Störeinfluss auf die komplexe Amplitude wird in Abhängigkeit von dem Testgewicht ermittelt. Beispielsweise ist das Massenträgheitsmoment des Rotors mittels des Testgewichts bestimmbar.

Gemäß zumindest einer Ausführungsform wird das Gesamtmoment mittels einer Fouriertransformation in den Bildraum transformiert. Hierbei wird sich zunutze gemacht, dass die Störungen durch die Unwucht während einer Umdrehung des Rotors einen sinusförmigen oder einen kosinusförmigen Verlauf aufweisen.

Gemäß zumindest einer Ausführungsform ist die Windenergieanlage während der Durchführung des anmeldungsgemäßen Verfahrens mit einem elektrischen Stromnetz gekoppelt. Insbesondere speist die Windenergieanlage während der Durchführung des anmeldungsgemäßen Verfahrens zur Ermittlung der Unwucht elektrische Energie in das Stromnetz ein.

Insbesondere wird der Rotor während der Durchführung des anmeldungsgemäßen Verfahrens von einer Strömung angetrieben, beispielsweise von Wind. Die Strömung versetzt den Rotor in Rotation, sodass die Windenergieanlage elektrische Energie in das elektrische Stromnetz einspeist. Währenddessen ist es möglich, mit dem anmeldungsgemäßen Verfahren die Unwucht zu ermitteln. Das Verfahren ist folglich an der montierten Windenergieanlage anwendbar und während des Betriebs durchführbar. Somit werden Ausfallzeiten und Produktionsverluste reduziert, da die Windenergieanlage für die Messung der Unwucht nicht vom Netz entkoppelt werden muss.

Gemäß zumindest einer Ausführungsform wird das Verfahren wiederkehrend zeitlich beabstandet durchgeführt. In regelmäßigen Abständen oder in unregelmäßigen Abständen, beispielsweise in Abhängigkeit von Betriebsparametern, wird das Verfahren durchgeführt, um wiederkehrend die Unwucht beziehungsweise eine Veränderung der Unwucht zu ermitteln. Gemäß zumindest einer weiteren Ausführungsform wird das Verfahren kontinuierlich andauernd durchgeführt. Während jeder Umdrehung des Rotors wird die Unwucht ermittelt, sodass auf Veränderungen der Unwucht schnell reagiert werden kann. Die Wiederholung des Verfahrens erfolgt ohne das Anbringen eines Testgewichts. Das bekannte Trägheitsmoment des Rotors mit einer bekannten Unwucht wird verwendet, um Veränderungen der Unwucht, also die aktuell vorliegende, tatsächliche Unwucht zu detektieren.

Mittels einer kontinuierlichen Durchführung des Verfahrens ist es möglich, Mittelwerte der ermittelten Werte zu verwenden, um die Unwucht zu ermitteln. Somit lässt sich beispielsweise die Genauigkeit erhöhen.

Weitere Vorteile, Merkmale und Weiterbildungen ergeben sich aus den nachfolgenden, in Verbindung mit den Figuren erläuterten Beispielen.

Es zeigen:

Figur 1 eine schematische Darstellung einer Windenergieanlage gemäß einem Ausführungsbeispiel,

Figur 2 eine schematische Darstellung eines Rotors mit einer Unwucht und einer Vorrichtung gemäß einem Ausführungsbeispiel, und

Figur 3 eine schematische Darstellung einer trigonometrischen Funktion gemäß einem Ausführungsbeispiel.

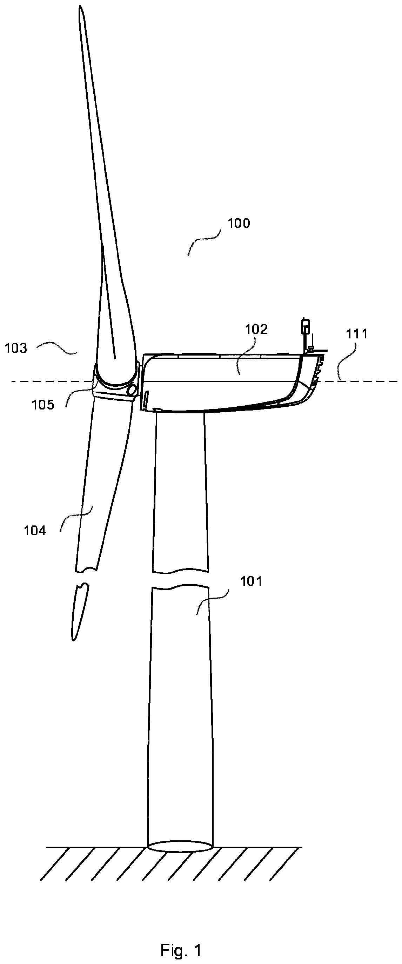

Figur 1 zeigt eine schematische Darstellung einer Windenergieanlage 100 gemäß einem Ausführungsbeispiel. Die Windenergieanlage 100 weist einen länglich ausgedehnten Turm 101 als Standvorrichtung auf. Der Turm 101 ist auf einem Untergrund befestigt.

An einem dem Untergrund gegenüberliegenden Ende des Turms 101 ist eine Gondel 102 angeordnet. Die Gondel 102 ist um eine Drehachse relativ zum Turm 101 drehbar. Insbesondere ist die Drehachse der Hauptausdehnungsrichtung des Turms 101 gleich gerichtet.

Die Gondel 102 weist beispielsweise einen Generator (nicht gezeigt) auf, der über eine Rotorwelle (nicht gezeigt) mit einem Rotor 103 gekoppelt ist. Der Rotor 103 weist ein Rotorblatt oder mehrere Rotorblätter 104 auf, die an einer Rotornabe 105 angeordnet sind. Der Rotor 103 wird im Betrieb von einer Strömung in Rotation versetzt, insbesondere durch Wind. Diese Rotation wird über die Rotorwelle zu dem Generator übertragen, der die kinetische Energie des Rotors in elektrische Energie umwandelt.

Die Drehachse des Rotors 111 ist insbesondere nicht parallel zu einem Schwerefeld oder Auftriebsfeld angeordnet, das insbesondere das Gravitationsfeld der Erde ist. Beispielsweise ist die Drehachse des Rotors 111 senkrecht zum Schwerefeld ausgerichtet. Die Drehachse ist insbesondere horizontal orientiert. Bei einer derart ausgerichteten Drehachse ist es möglich, dass eine statische Unwucht und eine rein dynamische Unwucht, auch Momentenunwucht genannt, auftreten. Insbesondere die statische Unwucht ist mittels dem nachfolgend näher erläuterten Verfahren bestimmbar.

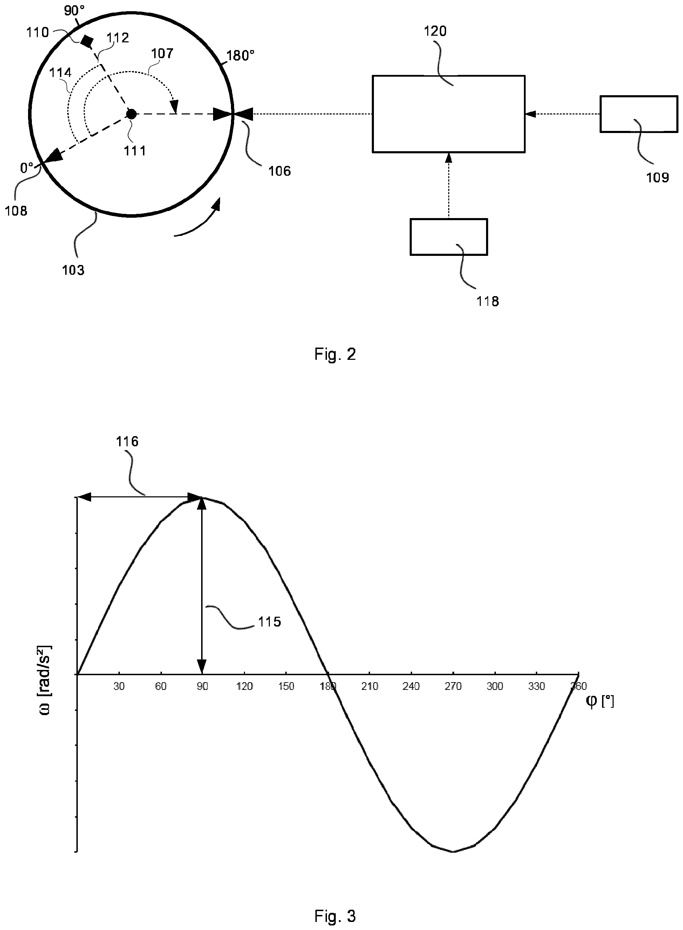

Figur 2 zeigt eine schematische Darstellung des Rotors 103 gekoppelt mit einer Vorrichtung 120, die zur Durchführung des anmeldungsgemäßen Verfahrens gemäß zumindest einem Ausführungsbeispiel geeignet ist. Der Rotor 103 rotiert in der Blattebene entgegen dem Urzeigersinn. Die Vorrichtung 120 kann mit einer Steuervorrichtung der Windenergieanlage 100 baulich vereinheitlicht ausgeführt, bzw. die Steuerung der Windenergieanlage kann zur Durchführung des anmeldungsgemäßen Verfahrens eingerichtet sein.

Ein Drehwinkelgeber 106 ist vorgesehen, um den Drehwinkel des Rotors 103 während jeweils einer Umdrehung um die Drehachse des Rotors 111 zu ermitteln. Folglich ist die Position des Rotors bekannt. Zudem werden eine Drehzahl und ein Drehmoment des Rotors ermittelt, beispielsweise mittels der Vorrichtung 118, die mehrere Sensoren und Messvorrichtungen aufweisen kann. Die erforderlichen Größen werden während einer Umdrehung jeweils gemessen oder aus der Steuerung der Windenergieanlage 100 erfasst. Das Massenträgheitsmoment des Rotors 103 ist bekannt. Beispielsweise ist das Massenträgheitsmoment mit der Methode eines Zusatzgewichts bestimmt. Somit ist das Trägheitsmoment entweder durch vorgegebene Daten oder durch Bestimmung der Daten bekannt. Der Drehwinkelgeber 106 weist beispielsweise eine Markierung 108 am rotierbaren Rotor 103 und einen Sensor im ruhenden System auf, der den Zeitpunkt des Passierens der Markierung am Sensor erfasst. Die Markierung 108 ist im dargestellten Ausführungsbeispiel die Nullmarkierung bezüglich derer die Drehwinkel 107 des Rotors 103 bestimmt wird.

Für die Erfassung einer Unwucht 110 am Rotor 103 muss der Rotor 103 rotieren. Dabei wird einerseits der Drehwinkel 107 erfasst sowie das Brems- oder Antriebsmoment und die Winkelgeschwindigkeit $\omega$ des Rotors 103. Die Mittel zur Erfassung der Position der Markierungen können Lichtschranken, Reflektionslichtschranken, induktive und kapazitive Geber, auf Wirbelstrom basierende Geber, Inkrementalgeber, Quadraturencoder, Neigungssensoren, alle Arten von bildgebenden Verfahren und abgeleitete Größen aus der Steuerung der Anlage sein.

Das Bremsmoment oder Antriebsmoment ist insbesondere ausrechenbar aus der Leistung, die nach dem Generator vorliegt. Der Drehwinkel 107 und die Leistung werden zeitgleich synchron erfasst. Folglich ist die Leistung als Funktion des Drehwinkels bekannt.

Alternativ ist es auch möglich, ein von einer Steuerung der Windenergieanlage 100 vorgegebenes Sollmoment zur Berechnung heranzuziehen.

Aus den erfassten Werten wird die Winkelgeschwindigkeit $\omega$ des Rotors berechnet, insofern sie nicht direkt gemessen worden ist. Umgekehrt kann durch Integration der Winkelgeschwindigkeit der Drehwinkel relativ zu einer einzelnen Markierung am Rotor berechnet werden, indem ab dem Moment integriert wird, wenn der Rotor auf der Markierung steht. Aus der Winkelgeschwindigkeit $\omega$ kann dann drehwinkelabhängig die Winkelbeschleunigung $\dot{\omega}$ und ein Brems- bzw. Antriebsmoment $M_B$ als Funktion des Drehwinkels 107 an diskreten Punkten um den Umfang des Rotors 103 berechnet werden. Wichtig in diesem Zusammenhang ist die Bestimmung der Größen als Funktion des Drehwinkels 107 und nicht als Funktion der Zeit.

Das Verfahren kann auch bei sehr langsam laufenden Rotor 103, z.B. während eines Trudelbetriebes, durchgeführt werden. Bei Windenergieanlagen liegen die zu messenden Schwingungen in einem für das konventionelle Betriebswuchten sehr niedrigen Frequenzbereich von unter 1 Hz. In diesem Bereich sind Messungen mit Beschleunigungssensoren aufwendig und oftmals durch die kleinen zu messenden Beschleunigungen fehlerbehaftet. Außerdem muss bei Windverhältnissen gewuchtet werden, die eine ausreichende und konstante Drehzahl ermöglichen, die in der Regel zu einem entsprechenden Produktionsausfall führen. Dies kann mit dem anmeldungsgemäßen Verfahren vermieden werden.

Per Definition der Unwucht 110 ist das auf einen Rotor im Schwerefeld wirkende Drehmoment gleich der Unwucht 110 mal der Beschleunigungskonstante des Schwerefeldes, im Schwerefeld der Erde also die Erdbeschleunigung g. Wenn keine ähnlich wirkenden zusätzlichen Momente am Rotor 103 angreifen, die nicht mit erfasst werden können, kann aus der resultierenden Änderung der Winkelgeschwindigkeit daher die Unwucht 110 berechnet werden.

Der Rotor 103 hat ein bekanntes Trägheitsmoment I. Die Unwucht 110 lässt sich darstellen als Produkt einer Punktförmigen Unwuchtmasse, die um eine Drehachse 111 mit einem Abstand 112 rotiert. An dem Rotor 103 greift zusätzlich das bekanntes Brems- oder Antriebsmoment $M_B$ an.

Ein Mittel zur Erfassung der Position der Markierung, beispielsweise der Drehwinkelgeber 106, gibt ein Signal über einen Übertragungskanal an die Vorrichtung 120 weiter, bei welcher es sich zum Beispiel um einen Zähler oder A/D-Wandler handelt. Die Vorrichtung 120 ist insbesondere auch dazu eingerichtet das Bremsmoment und die Betriebsparameter, wie Windgeschwindigkeit, Leistung, Pitchwinkel und Drehzahl zeitgleich mit zu erfassen. Mittels dieser Informationen lassen sich die drehwinkelabhängigen Winkelgeschwindigkeiten und Brems- bzw. Antriebsmomente berechnen.

Vereinfacht ausgedrückt ist die Summe der Drehmomente $M$ aus der Massenträgheit und des An- oder Abtrieb des Rotors einschließlich seiner Unwucht 110 gleichgesetzt dem Drehmoment $M_u$, das durch die Unwucht im Schwerefeld erzeugt wird.

Anhand der nachfolgenden Gleichung (1) bis (4) und unter Berücksichtigung der Darstellung der Figur 2 ist zu erkennen, dass die Drehwinkelbeschleunigung $\omega$ eine Funktion des Drehwinkels 107, auch als φ bezeichnet, ist:

$$M = M_u \qquad (1)$$

mit

$$M = M_B + I \cdot \dot{\omega} + m \cdot r^2 \cdot \dot{\omega} \qquad (2)$$

wobei $M_B$ als Bremsmoment definiert ist, also vom Vorzeichen dem Unwuchtmoment entgegengesetzt ist, und

$$M_u = m \cdot g \cdot r \cdot \cos(\varphi - \varphi_u) \qquad (3)$$

mit

$\omega$:     Winkelgeschwindigkeit
$\dot{\omega}$ :     Winkelbeschleunigung
$\varphi$:     Winkel des Rotors, auch als Drehwinkel 107 bezeichnet, entgegen der Drehrichtung des Rotors abgetragen
$\varphi_U$:     Winkel der resultierenden Unwucht gegenüber der Nullgradmarke 108, beispielsweise auch als Winkel 114 bezeichnet, entgegen der Drehrichtung des Rotors abgetragen
$g$:     Erdbeschleunigung
$I$:     Massenträgheitsmoment des Rotors und des rotierenden Teils des Triebstrangs
$r$:     Radius der Punktmasse m auf dem Rotor, durch die sich die resultierende Unwucht als Produkt $m \cdot r$ darstellen lässt, auch als Abstand 112 bezeichnet
$m$:     Masse der Punktmasse, durch die sich die resultierende Unwucht 110 als Produkt $m \cdot r$

darstellen lässt.

Aus den Gleichungen (1) bis (3) ergibt sich unter Annahme der Nährung das $I \gg mr^2$ die drehwinkelabhängige Momentengleichung

$$f(\varphi) \equiv M_B(\varphi) + I \cdot \dot{\omega}(\varphi) = g \cdot m \cdot r \cdot \cos(\varphi - \varphi_U) \qquad (4),$$

wobei die linke Seite der Gleichung aus der Messung bestimmt wird und die rechte Seite die gesuchten Größen $m \cdot r$ und $\varphi_U$ enthält.

Die gesuchten Größen können durch Anpassen einer trigonometrischen Funktion (Figur 3) wie einer Kosinusfunktion oder einer Sinusfunktion an die Messwerte und mittels Koeffizientenvergleich ermittelt werden.

Diese Funktion wird gemäß weiteren Ausführungsbeispielen auch in einen Bildraum transformiert von einer Funktion $f(\varphi)$ in $F(1/\varphi)$. In dieser transformierten Funktion F ist der unwuchtbasierte Anteil idealerweise auf einen Funktionswert konzentriert, z.B. bei $A = F(1/(2n))$ im Falle einer Fouriertransformation.

Bei der Transformation, bei der es sich um eine Integraltransformation, und insbesondere eine Fourier-Transformation handelt, sollte sich der Anteil der Unwucht auf möglichst wenige Punkte im Bildraum konzentrieren.

Im Falle der Fourier-Transformation einer Folge von Winkelbeschleunigungen über eine Umdrehung konzentriert sich die Unwucht 110 auf einen Punkt im Bildraum der Transformation. Analog zur Transformation einer Kosinusfunktion als Zeitreihe kann dieser Punkt die erste Harmonische genannt werden und kann hinsichtlich des Scheitelwerts der zugrunde liegenden Kosinusfunktion ausgewertet werden. Daraus ergibt sich die Unwucht $\boldsymbol{m \cdot r}$ und der Winkel $\varphi_U$. Mit anderen Worten werden die komplexen Koeffizienten der ersten Harmonischen der transformierten Funktion berechnet.

Durch das Setzen einer Ausgleichsunwucht derselben Größe wie die Unwucht $\boldsymbol{m \cdot r}$ an der effektiven Winkelposition $\varphi_u$ + 180° oder durch Entfernen der Unwucht $\boldsymbol{m \cdot r}$ an der effektiven Winkelposition $\varphi_u$ kann die Unwucht ausgeglichen werden.

Insbesondere greifen keine zusätzlichen Störmomente am Rotor 103 an, die wesentliche Beiträge zum ausgewerteten Koeffizienten von F im Bildraum beitragen. Dies kann dadurch gewährleistet werden, dass solche Störmomente durch eine Beschränkung auf bestimmte Betriebsbedingungen eingeschränkt werden, oder dass sie eine signifikante Abhängigkeit von einer oder mehreren Betriebsparametern haben. Die Betriebsparameter werden beispielsweise mittels einer Messvorrichtung 109 ermittelt. Dann lassen sich die Störmomente als eine Funktion V dieser Parameter darstellen und durch Auswertung von diesen bei verschiedenen Werten für die relevanten Parameter lässt sich die Funktion V von F abgespalten.

Wird die erste Harmonische A der Transformierten als Funktion der relevanten Betriebsparameter dargestellt, ergibt sich im Idealfall eine Konstante, die unabhängig von den Betriebsparametern ist. In der Praxis ist sie aber aufgrund verschiedener winkelgeschwindigkeitsabhängiger Einflüsse, zumeist exakt oder nährungsweise eine Polynomfunktion.

Durch eine Anpassungsfunktion kann der Zusammenhang zwischen den Betriebsparametern und der ersten Harmonischen als kontinuierliche Funktion dargestellt werden. Die Anpassungsfunktion ist insbesondere eine Polynomfunktion. Der konstante Anteil der Polynomfunktion ist die gesuchte Winkelbeschleunigung anhand derer sich der Winkel $\varphi_u$ der Unwuchtmasse berechnen lässt.

Das anmeldungsgemäße Verfahren ermöglicht die Messung der Winkelbeschleunigung durch Signalanalyse, wobei Anteile, die auf Messfehler und tatsächliche Änderungen der Winkelbeschleunigung oder auf anderen Ursachen (Reibung, Strömung etc.) beruhen, eliminiert werden. Dieses Verfahren ist in-situ anwendbar, ohne dass zusätzliche Sensoren zur Messung der Kraft installiert werden müssten. Das Verfahren eignet sich insbesondere für Windenergieanlagen. Hier ändert sich das Drehmoment durch die Strömung stochastisch und lässt sich deshalb von den deterministischen Drehmomentschwankungen aus der Unwucht unterscheiden.

Neben der schnellen Fourier-Transformation eignen sich auch die diskrete Fourier-Transformation, die z-Transformation und andere Basistransformationen des Vektorraums, der den durch die Messwerte auf einer Umdrehung gegeben Vektor umfasst.

Die kontinuierliche Anpassungsfunktion ist nicht zwingend eine Polynomfunktion, da es unter bestimmten Umständen erforderlich sein kann, andere Anpassungsfunktionen als Polynomfunktionen wie z.B. Expotentialfunktionen zu verwenden, je nachdem welcher Natur die Störungen sind.

Figur 3 zeigt eine schematische Darstellung eines kosinusförmigen Verlaufs der Winkelbeschleunigung über dem Drehwinkel, der von der Unwucht 110 verursacht wird. Eine Phasenverschiebung 116 korrespondiert zu dem Winkel 114, unter dem die Unwucht 110 relativ zum vorgegebenen Nullpunkt 108 angeordnet ist. Gemäß Ausführungsbeispielen entspricht die Phasenverschiebung 116 dem Winkel 114, unter dem die Unwucht 110 relativ zum vorgegebenen Nullpunkt 108 angeordnet ist. Eine Amplitude 115 ist proportional zu einer Größe der Unwucht 110. Im dargestellten Beispiel beträgt die Phasenverschiebung 116 90°.

Aus der Phasenverschiebung 116 der in Figur 3 erkennbaren trigonometrischen Funktion lässt sich folglich auf den Winkel 114 der Unwucht 110 schließen. Aus der Amplitude 115 lässt sich auf die Masse mal Radius der Unwucht 110 schließen.

Gemäß Ausführungsbeispielen ist ein Schwellenwert für die Amplitude 115 vorgegeben. Innerhalb des Schwellenwerts ist die Auswirkung der Unwucht 110 so klein, dass keine Gegenmaßnahmen getroffen werden.

Das anmeldungsgemäße Verfahren ermöglicht mit vertretbarem Aufwand und insbesondere in-situ, also während des Betriebs, ein Bestimmen der Unwucht 110. Hierfür ist keine Wuchtbank oder ähnliches notwendig, die bei Rotoren 103 für Windenergieanlagen 110 nur mit hohem Aufwand zur Ermittlung einer Unwucht verwendbar sind. Das ermittlungsgemäße Verfahren ermöglicht zudem eine Bestimmung der Unwucht 110 unabhängig von der Drehzahl, in der sich der Rotor 103 bewegt. Eine Messung ist auch möglich, wenn der Rotor 103 nicht in der Nenndrehzahl oder nahe von Resonanzfrequenzen betrieben wird. Insbesondere bei höheren Windgeschwindigkeiten ist somit ein Produktionsausfall durch Wuchten vermeidbar. Zudem muss die Windenergieanlage 100 nicht zugänglich sein, um das Verfahren durchzuführen. Auf ein Setzen von Testgewichten kann verzichtet werden, wenn das Massenträgheitsmoment des Rotors und des rotierenden Teils des Triebstrangs bekannt ist. Das anmeldungsgemäße Verfahren ermöglicht eine Bestimmung der Unwucht 110 des rotierenden Rotors 103, das vor Ort an der montierten Windanlage 100 anwendbar ist und das bei geringen Drehzahl und mit geringem Aufwand durchführbar ist, insbesondere mit geringem Aufwand für Messtechnik und Antriebstechnik. Die erforderliche Messtechnik ist herkömmlich beispielsweise schon teilweise oder vollständig zum Zweck der Steuerung der Windenergieanlage 100 an der Anlage 100 vorhanden.

Aufgrund der Verwendung der Größen in Abhängigkeit vom Drehwinkel 107 ist die Berechnung der Unwucht 110 einfacher, als wenn eine zeitliche Abhängigkeit zugrunde gelegt würde. Das ermittelte Gesamtmoment setzt sich zusammen aus dem Moment, das durch die Unwucht 110 verursacht wird und weiteren Momenten. Folglich liegt ein Signal vor, dass sich aus mehreren Signalen zusammensetzt, die überlagert sind. Eine Filterfunktion, wie beispielsweise eine Fourier-Transformation, ermöglicht das Herausfiltern der Sinusfunktion oder Kosinusfunktion, die repräsentativ ist für die Unwucht 110. Auch eine Laplace-Transformation oder andere Filterfunktionen sind möglich.

Das anmeldungsgemäße Verfahren ermöglicht ein Ermitteln und Lokalisieren der Unwucht 110 während des Betriebs der Windenergieanlage 100. Somit werden Ausfallzeiten und Ertrag der Windenergieanlage 100 während der Bestimmung der Unwucht 110 reduziert. Somit wird die Effizienz der Windenergieanlage 100 erhöht. Zudem kann der Verschleiß durch Korrektur der Unwucht verringert und dadurch der Wartungsaufwand verringert und die Lebensdauer erhöht werden. Das Drehmoment wird insbesondere aus der Leistung und der Drehzahlschwankung ermittelt. Das Verfahren ist während des Produktionsbetriebs der Windenergieanlage 100 durchführbar, also während elektrischer Strom von der Windenergieanlage in das angeschlossene elektrische Stromnetz eingespeist wird. Durch die Überwachung der Unwucht können Ermüdungslasten reduziert werden und damit Bauteile günstiger ausgelegt werden. Das verringert die Herstellungskosten und erhöht die Wirtschaftlichkeit der Anlage.

Bezugszeichen

100    Windenergieanlage
101    Turm
102    Gondel
103    Rotor
104    Rotorblatt
105    Rotornabe
106    Drehwinkelgeber
107    Drehwinkel
108    Markierung
109    Messvorrichtung
110    Unwucht
111    Drehachse
112    Abstand
114    Winkel
115    Amplitude
116    Phasenverschiebung
118    Vorrichtung
120    Vorrichtung

**Patentansprüche**

1. Verfahren zum Ermitteln einer statischen Unwucht (110) eines Rotors (103) einer Windenergieanlage (100), wobei der Rotor (103) ein bekanntes Massenträgheitsmoment und eine Drehachse (111) aufweist, umfassend:

- Ermitteln einer ortsabhängigen Winkelbeschleunigung und eines ortsabhängigen Drehmoments als Funktion des Drehwinkels (107) während einer Rotorumdrehung;
- Ermitteln eines Trägheitsmoments als Produkt aus Winkelbeschleunigung und Massenträgheitsmoment,
- Addition des ermittelten Trägheitsmoments und des ermittelten ortsabhängigen Drehmoments zu einem ortsabhängigen Gesamtmoment;
- Ermitteln einer trigonometrischen Funktion aus dem ortsabhängigen Gesamtmoment;
- Ermitteln der statischen Unwucht (110), die eine Masse in einem Abstand (112) von der Drehachse (111) des Rotors (103) und einen Winkel (114) aufweist, in Abhängigkeit von einer Amplitude (115) und einer Phasenverschiebung (116) der ermittelten trigonometrischen Funktion.

2. Verfahren nach Anspruch 1, bei dem das Ermitteln der statischen Unwucht (110) umfasst:

- Durchführen eines Koeffizientenvergleichs für die Amplitude (115) und die Phasenverschiebenung (116).

**3.** Verfahren nach Anspruch 1 oder 2, bei dem das Ermitteln der trigonometrischen Funktion umfasst:

- Ermitteln einer Sinusfunktion oder einer Kosinusfunktion.

**4.** Verfahren nach einem der Ansprüche 1 bis 3, umfassend:

- Transformation des ortsabhängigen Gesamtmoments als Funktion des Drehwinkels (107) in einen Bildraum;
- Ermitteln einer komplexen Amplitude als Intensität des unwuchtbedingten Moments im Bildraum der transformierten Funktion;
- Ermittlung des Winkels (114) der statischen Unwucht (110) in Abhängigkeit der komplexen Amplitude.

**5.** Verfahren nach Anspruch 4, umfassend:

- Filtern des Realteils und des Imaginärteils der komplexen Amplitude für einen bestimmten Werteraum von Betriebsparametern der Windenergieanlage (100);
- Ermitteln eines jeweiligen Mittelwerts des Realteils und des Imaginärteils der komplexen Amplitude;
- Ermitteln der statischen Unwucht (110) aus den Mittelwerten des Realteils und des Imaginärteils der komplexen Amplitude.

**6.** Verfahren nach Anspruch 4 oder 5, umfassend:

- Ermittlung mindestens eines Betriebsparameters,
- Darstellung des Realteils und des Imaginärteils der komplexen Amplitude jeweils als Funktion des mindestens einen Betriebsparameters; und
- Ermitteln eines Anteils der komplexen Amplitude in Abhängigkeit von dem mindestens einen Betriebsparameter mittels einer kontinuierlichen Anpassungsfunktion für den Realteil und den Imaginärteil;
- Ermitteln der statischen Unwucht (110) in Abhängigkeit von dem ermittelten Anteil.

**7.** Verfahren nach Anspruch 6, wobei die Anpassungsfunktion eine Polynomfunktion ist.

**8.** Verfahren nach Anspruch 6 oder 7, wobei die Anpassungsfunktion eine Exponentialfunktion ist.

**9.** Verfahren nach einem der Ansprüche 4 bis 8,

- Setzen eines Testgewichts an den Rotor (103),
- Ermitteln von einem Störeinfluss auf die komplexe Amplitude in Abhängigkeit von dem Testgewicht.

**10.** Verfahren nach einem der Ansprüche 4 bis 9, umfassend:

- Transformation des ortsabhängigen Gesamtmoments in den Bildraum mittels einer Fouriertransformation.

**11.** Verfahren nach einem der Ansprüche 1 bis 10, bei dem die Windenergieanlage (100) während der Durchführung des Verfahrens mit einem elektrischen Stromnetz gekoppelt ist.

**12.** Verfahren nach einem der Ansprüche 1 bis Anspruch 11, wobei die Durchführung des Verfahrens wiederkehrend zeitlich beabstandet oder kontinuierlich andauernd erfolgt.

**13.** Verfahren nach einem der Ansprüche 1 bis 12, bei dem der Rotor (103) während der Durchführung des Verfahrens von einer Strömung angetrieben wird.

**14.** Vorrichtung (120) für eine Windenergieanlage (100) zum Ermitteln einer statischen Unwucht (110) eines Rotors (103) der Windenergieanlage (100), wobei die Vorrichtung (120) ausgebildet ist, ein Verfahren nach einem der Ansprüche 1 bis 13 auszuführen.

**Claims**

**1.** A method for determining a static unbalance (110) of a rotor (103) of a wind turbine (100), wherein the rotor (103) has a known mass moment of inertia and an axis of rotation (111), comprising:

- determining a location-dependent angle acceleration and a location-dependent torque as a function of the rotation angle (107) during a rotor rotation;
- determining a moment of inertia as a product of the angle acceleration and the mass moment of inertia,
- adding the determined moment of inertia and the determined location-dependent torque into a location-dependent total moment;
- determining a trigonometric function from the location-dependent total moment;
- determining the static unbalance (110) which has a mass at a distance (112) from the axis of rotation (111) of the rotor (103), and an angle (114), depending on the amplitude (115) and the phase shift (116) of the determined trigonometric function.

2. The method according to claim 1, in which determining the static unbalance (110) comprises:

- performing a coefficient comparison for the amplitude (115) and the phase shift (116).

3. The method according to claim 1 or 2, in which determining the trigonometric function comprises:

- determining a sine function or a cosine function.

4. The method according to any one of claims 1 to 3, comprising:

- transforming the location-dependent total moment as a function of the rotation angle (107) into an image space;
- determining in the image space of the transformed function, a complex amplitude as an intensity of the moment caused by unbalance;
- determining an angle (114) of the static unbalance (110) depending on the complex amplitude.

5. The method according to claim 4, comprising:

- filtering the real part and the imaginary part of the complex amplitude for a determined space of values of operating parameters of the wind turbine (100);
- determining a respective average value of the real part and the imaginary part of the complex amplitude;
- determining the static unbalance (110) from the average values of the real part and the imaginary part of the complex amplitude.

6. The method according to claim 4 or 5, comprising:

- determining at least one operating parameter,
- representing the real part and the imaginary part of the complex amplitude respectively as a function of the at least one operating parameter; and
- determining a portion of the complex amplitude depending on the at least one operating parameter by means of a continuous adaptation function for the real part and the imaginary part;
- determining the static unbalance (110) depending on the determined portion.

7. The method according to claim 6, wherein the adaptation function is a polynomial function.

8. The method according to claim 6 or 7, wherein the adaptation function is an exponential function.

9. The method according to any one of claims 4 to 8, comprising:

- placing a test weight onto the rotor (103),
- determining a disturbing influence on the complex amplitude depending on the test weight.

10. The method according to any one of claims 4 to 9, comprising:

- transforming the total moment into the image space by means of a Fourier transformation.

11. The method according to any one of claims 1 to 10, in which the wind turbine (100) is coupled to an electric power supply grid during the execution of the method.

**12.** The method according to any one of claims 1 to claim 11, wherein the execution of the method is performed recurrently and temporarily spaced or continuously and permanently.

**13.** The method according to any one of claims 1 to 12, in which the rotor (103) is driven by a flow during the execution of the method.

**14.** A device (120) for a wind turbine (100) for determining a static unbalance (110) of a rotor (103) of the wind turbine (100), wherein the device (120) is configured to carry out a method according to any one of claims 1 to 13.

**Revendications**

**1.** Procédé de détermination d'un balourd statique (110) d'un rotor (103) d'une éolienne (100), sachant que le rotor (103) présente un couple d'inertie de masse connu et un axe de rotation (111), comprenant :

- la détermination d'une accélération angulaire dépendante du lieu et d'un couple de rotation dépendant du lieu comme fonction de l'angle de rotation (107) pendant un tour de rotor ;
- la détermination d'un couple d'inertie comme produit de l'accélération angulaire et du couple d'inertie de masse,
- l'addition du couple d'inertie déterminé et du couple de rotation déterminé en un couple total dépendant du lieu ;
- la détermination d'une fonction trigonométrique à partir du couple total dépendant du lieu ;
- la détermination du balourd statique (110) qui présente une masse à une distance (112) de l'axe de rotation (111) du rotor (103) et un angle (114), en fonction de l'amplitude (115) et du décalage de phase (116) de la fonction trigonométrique déterminée.

**2.** Procédé selon la revendication 1, dans lequel la détermination du balourd statique (110) comprend :

- l'exécution d'une comparaison de coefficient pour l'amplitude (115) et le décalage de phase (116).

**3.** Procédé selon la revendication 1 ou 2, dans lequel la détermination de la fonction trigonométrique comprend :

- la détermination d'une fonction sinus ou d'une fonction cosinus.

**4.** Procédé selon l'une des revendications 1 à 3, comprenant :

- la transformation du couple total dépendant du lieu comme fonction de l'angle de rotation (107) en un espace image ;
- la détermination d'une amplitude complexe comme intensité du couple lié au balourd dans l'espace image de la fonction transformée ;
- la détermination de l'angle (114) du balourd statique (110) en fonction de l'amplitude complexe.

**5.** Procédé selon la revendication 4, comprenant :

- le filtrage de la part réelle et de la part imaginaire de l'amplitude complexe pour un espace de valeurs déterminé de paramètres de fonctionnement de l'éolienne (100) ;
- la détermination d'une valeur moyenne respective de la part réelle et de la part imaginaire de l'amplitude complexe ;
- la détermination du balourd statique (110) à partir des valeurs moyennes de la part réelle et de la part imaginaire de l'amplitude complexe.

**6.** Procédé selon la revendication 4 ou 5, comprenant :

- la détermination d'au moins un paramètre de fonctionnement,
- la représentation de la part réelle et de la part imaginaire de l'amplitude complexe respectivement comme fonction de l'au moins un paramètre de fonctionnement ; et
- la détermination d'une part de l'amplitude complexe en fonction de l'au moins un paramètre de fonctionnement moyennant une fonction d'adaptation continue pour la part réelle et la part imaginaire ;

- la détermination du balourd statique (110) en fonction de la part déterminée.

**7.** Procédé selon la revendication 6, sachant que la fonction d'adaptation est une fonction polynomiale.

**8.** Procédé selon la revendication 6 ou 7, sachant que la fonction d'adaptation est une fonction exponentielle.

**9.** Procédé selon l'une des revendications 4 à 8, comprenant :

- la pose d'un poids de test sur le rotor (103),
- la détermination d'une influence parasite sur l'amplitude complexe en fonction du poids de test.

**10.** Procédé selon l'une des revendications 4 à 9, comprenant :

- la transformation du couple total en l'espace image moyennant une transformation de Fourrier.

**11.** Procédé selon l'une des revendications 1 à 10, dans lequel l'éolienne (100) est couplée à un réseau électrique pendant l'exécution du procédé.

**12.** Procédé selon l'une des revendications 1 à 11, sachant que l'exécution du procédé a lieu de manière répétitive espacée dans le temps ou de manière permanente en continu.

**13.** Procédé selon l'une des revendications 1 à 12, dans lequel le rotor (103) est entraîné par un courant pendant l'exécution du procédé.

**14.** Dispositif (120) pour une éolienne (100) pour la détermination d'un balourd statique (110) d'un rotor (103) de l'éolienne (100), sachant que le dispositif (120) est constitué pour exécuter un procédé selon l'une des revendications 1 à 13.

Fig. 1

Fig. 2

Fig. 3

**EP 3 492 735 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2354538 A1

- EP 2434146 A1